# EUROPÄISCHE PATENTANMELDUNG

(11) **EP 1 033 720 A2**
(43) Veröffentlichungstag der Anmeldung: **06.09.2000**
(21) Anmeldenummer: 99119607.2
(22) Anmeldetag: 02.10.1999
(51) Int. Cl.: G11B 33/04

(54) **Behälter zur Lagerung von Informationsträgern**

(30) Priorität: 03.03.1999 DE 29903823 U
(71) Anmelder: J. Nickert GmbH, 89231 Neu-Ulm (DE)
(72) Erfinder: Gaspar, Jürgen, 89173 Lonsee (DE)
(74) Vertreter: Hentrich, Swen Dipl.-Phys. Dr.

(57) **Zusammenfassung**

Die Erfindung betrifft einen Behälter zur Lagerung von scheibenförmigen Informationsträgern (2), insbesondere von elektronisch lesbaren Informationsträgern (2) wie Audio-CDs, CD-ROMs oder DVDs. Dieser Behälter besteht aus zwei aufeinanderklappbaren Teilbehältern (3, 4), wobei in mindestens einem der Teilbehälter (3) eine zumindest auf einem Teil des Umfangs des Informationsträgers (2) an dessen Außenkontour angepaßte Aufnahme (7) ausgebildet ist, wobei auf zwei einander gegenüberliegenden Seiten der Aufnahme (7) eine Auflage (8) angeordnet ist, deren Höhe die Dicke des Informationsträgers (2) übersteigt, und wobei die beiden Teilbehälter (3, 4) einen Wulst (9) aufweisen, deren kumulierte, von der Auflage (8) gemessenen Höhen im aufeinandergeklappten Zustand der Teilbehälter (3, 4) die Dicke einer Jewel-Box (10) übersteigen.

## Beschreibung

Die Erfindung betrifft einen Behälter zur Lagerung von scheibenförmigen Informationsträgern, insbesondere von elektronisch lesbaren Informationsträgern wie Audio-CDs, CD-ROMs oder DVDs, bestehend aus zwei aufeinanderklappbaren Teilbehältern.

Derartige Behälter sind aus der Praxis bekannt und unter der Bezeichnung Jewel-Box weit verbreitet, wobei bei dieser Jewel-Box die beiden Teilbehälter über Gelenke miteinander verbunden sind. Diese bekannten Behälter sind zur Lagerung von bis zu drei Informationsträgern geeignet; die Handhabung ist dann jedoch relativ umständlich. Bei den bekannten Behältern besteht der eine Teilbehälter in der Regel aus einem dunkel gefärbten Hartplastik, während der andere Teilbehälter durch einen durchsichtigen, klaren Kunststoffdeckel gebildet ist. Insgesamt ist deren Erscheinungsbild wenig vorteilhaft, wobei nur die kleine Stirnseite zur Verfügung steht, um Informationen über den Inhalt des Behälters kenntlich zu machen, wenn mehrere Behälter aneinandergrenzend gestapelt sind.

Der Erfindung liegt daher die Aufgabe zugrunde, einen Behälter der eingangs genannten Art so auszubilden, daß dessen Fassungsvermögen an Informationsträgern gesteigert ist.

Diese Aufgabe wird bei einem Behälter der eingangs genannten Art dadurch gelöst, daß in mindestens einem der Teilbehälter eine zumindest auf einem Teil des Umfangs des Informationsträgers an dessen Außenkontur angepaßte Aufnahme ausgebildet ist, daß auf zwei einander gegenüberliegenden Seiten der Aufnahme eine Auflage angeordnet ist, deren Höhe die Dicke des Informationsträgers übersteigt, und daß die beiden Teilbehälter einen Wulst aufweisen, deren kumulierte, von der Auflage gemessenen Höhen im aufeinandergeklappten Zustand der Teilbehälter die Dicke einer Jewel-Box übersteigen.

Dieser erfindungsgemäße Behälter bietet den Vorteil, daß in dessen Aufnahme ein Informationsträger eingelegt werden kann und darüber hinaus zusätzlich Platz zur Lagerung einer Jewel-Box mit den darin befindlichen Informationsträgern zur Verfügung steht, da die Dicke der Auflagen sowie die Höhe der Wülste so bemessen ist, daß die Jewel-Box den Informationsträger der Aufnahme nicht beschädigen kann und sich der Behälter auch bei eingesetzter Jewel-Box schließen läßt, wobei insgesamt die Dicke des Behälters nicht geringfügig die der Jewel-Box übersteigt. Auch stellt der erfindungsgemäße Behälter für die neuen hochwertigen DVDs eine dem Wert angemessene Verpackung dar, die aufgrund der gesteigerten Größe eine zusätzliche Fläche zur Verfügung stellt, auf der Informationen über den Inhalt des Behälters wiedergegeben werden können.

Die Vorteile des erfindungsgemäßen Behälters hinsichtlich der Aufnahmekapazität lassen sich steigern, wenn in beiden Teilbehältern die Aufnahme sowie die beiden Auflagen ausgebildet sind, so daß der Platzbedarf zur Lagerung einer gegebenen Anzahl von Informationsträgern halbiert ist.

Zweckmäßigerweise ist der Behälter so gestaltet, daß die Auflagen den an die Außenkontour angepaßten Rand der Aufnahmen bilden, so daß in dem Behälter nur wenige Strukturen ausgebildet werden müssen, um das gewünschte Ergebnis zu erzielen.

Bei der Herstellung des als Massenartikel konzipierten Behälters bietet es einen deutlichen Kostenvorteil, wenn die beiden als tiefgezogene Kunststoffteile ausgebildeten Teilbehälter über einen Behälterrücken miteinander verbunden sind. So können in einfacher Weise mit der bewährten Methode des Tiefziehens die beiden Teilbehälter hergestellt werden, die durch den Behälterrücken verbunden sind, der ein Filmscharnier bildet und ein leichtes Aufeinanderklappen der Teilbehälter ermöglicht.

Um eine möglichst große Fläche bereitzustellen, auf der in ansprechender und werbewirksamer Weise auf den Inhalt des erfindungsgemäßen Behälters hingewiesen werden kann, ist auf der der Aufnahme gegenüberliegenden Außenseite der Teilbehälter eine Behälterdecke angeordnet. Diese Behälterdecke kann ähnlich wie ein Bucheinband gestaltet sein und so sich harmonisch in ein bestehendes Archiv von Büchern, Video-Buchboxen oder anderen Medienverpackungen einfügen.

Im Rahmen der Erfindung ist weiterhin vorgesehen, daß die Auflagen sich in der parallel zu der durch den Behälterrücken gebildeten Klappachse liegenden Richtung gegenüberliegen. Durch diese Ausgestaltung nähert sich der erfindungsgemäße Behälter in seinen Außenabmessungen denen der bekannten Video-Buchboxen an, die in Videotheken in Regalen gelagert werden, deren Dimensionierung hinsichtlich der Abstände der Regalbretter und deren Tiefe auf diese Video-Buchboxen abgestimmt ist. Weil zunehmend auch DVDs als Informationsträger hoher Kapazität benutzt werden, um Videofilme mit zusätzlichen Informationen wie Untertitel oder zusätzlichen Tonspuren, die eine Originalfassung und eine synchronisierte Fassung enthalten, anzubieten, können mit dem erfindungsgemäßen Behälter die schon existierenden Regalsysteme unverändert weiter genutzt werden.

Um sicherzustellen, daß in dem erfindungsgemäßen Behälter nicht nur eine Jewel-Box aufgenommen werden kann, sondern daß diese darin auch sicher gehalten ist, ist vorgesehen, daß der Wulst mindestens eines der Teilbehälter zwei gegenüberliegende Längsnuten zur Bildung einer der Fixierung der Jewel-Box dienenden zweiten Aufnahme hat.

Dabei hat es sich als günstig gezeigt, wenn die zweite Aufnahme symmetrisch zur Aufnahme ausgebildet ist, also ober- und unterhalb Platz verbleibt, um die Jewel-Box zu ergreifen.

Prinzipiell ist es ausreichend, den scheibenförmigen Informationsträger randseitig in der Aufnahme zu halten. Um einen sicheren Halt zu gewährleisten, ohne ein zu starkes Durchbiegen des Informationsträgers bei der Entnahme zu verursachen, ist es jedoch bevorzugt, wenn in der Aufnahme ein Zentrierstift zum Eingriff in die Öffnung des Informationsträgers angeordnet ist, und wenn die Höhe des Zentrierstiftes der Höhe der Auflage entspricht. Dies bietet zusätzlich den Vorteil, daß die Jewel-Box in der zweiten Aufnahme nicht nur an ihrem oberen und unteren Rand abgestützt ist, sondern auch in der Mitte, so daß ein Kontakt der Jewel-Box mit dem darunter befindlichen Informationsträger sicher vermieden ist und Beschädigungen nicht auftreten können.

Um einen Verlust der Informationsträger zu vermeiden, ist zweckmäßigerweise der erfindungsgemäße Behälter so gebildet, daß der Wulst des einen Teilbehälters und der Wulst des anderen Teilbehälters im aufeinandergeklappten Zustand einen Rastsitz bilden.

Im folgenden soll die Erfindung an einem in der Zeichnung dargestellten Ausführungsbeispiel näher erläutert werden; es zeigen:
- Fig. 1: eine Draufsicht auf den erfindungsgemäßen Behälter im auseinandergeklappten Zustand,
- Fig. 2: den Schnitt II-II aus Fig. 1,
- Fig. 3: den Schnitt III-III aus Fig. 1,

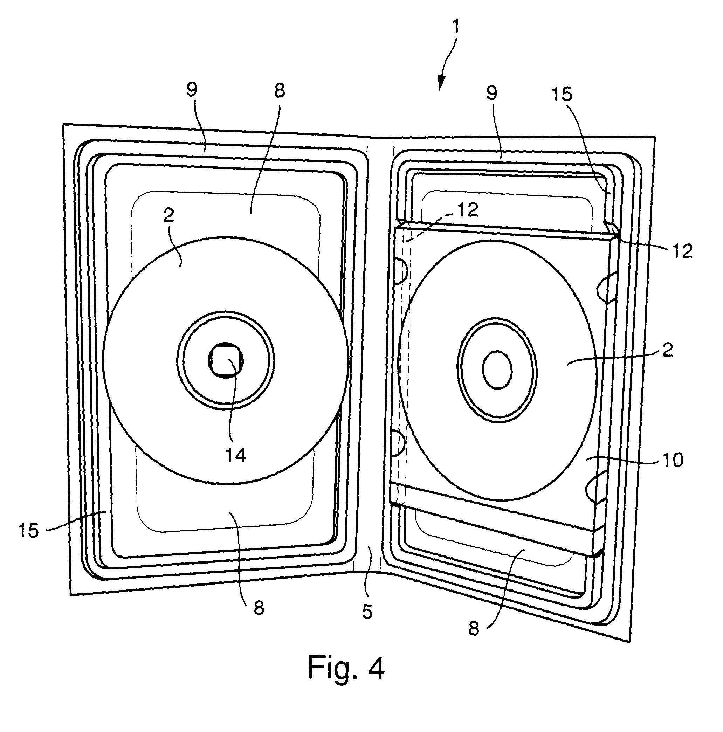

- Fig. 4: eine perspektivische Ansicht des aufgestellten, auseinandergeklappten Behälters mit einem darin eingesetzten Informationsträger und einer Jewel-Box,

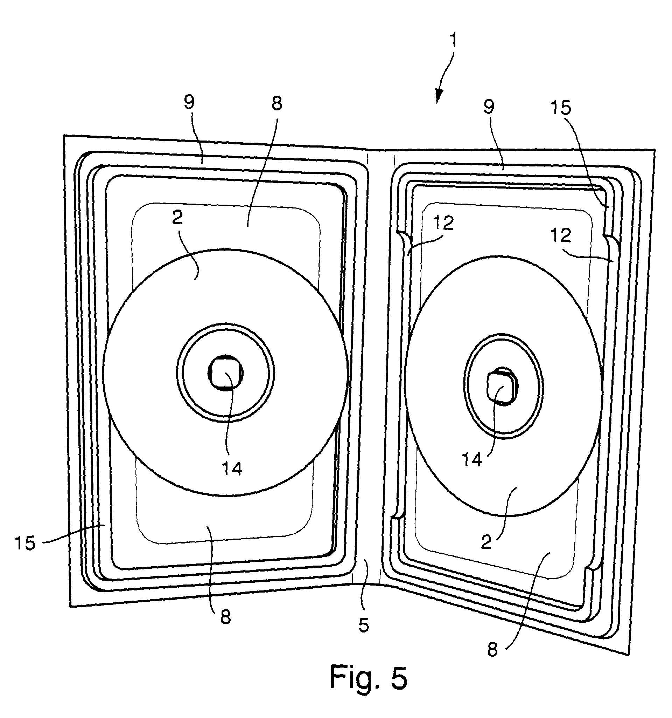

- Fig. 5: eine der Fig. 4 entsprechende Darstellung mit in beiden Teilbehältern eingesetzten Informationsträgern, und

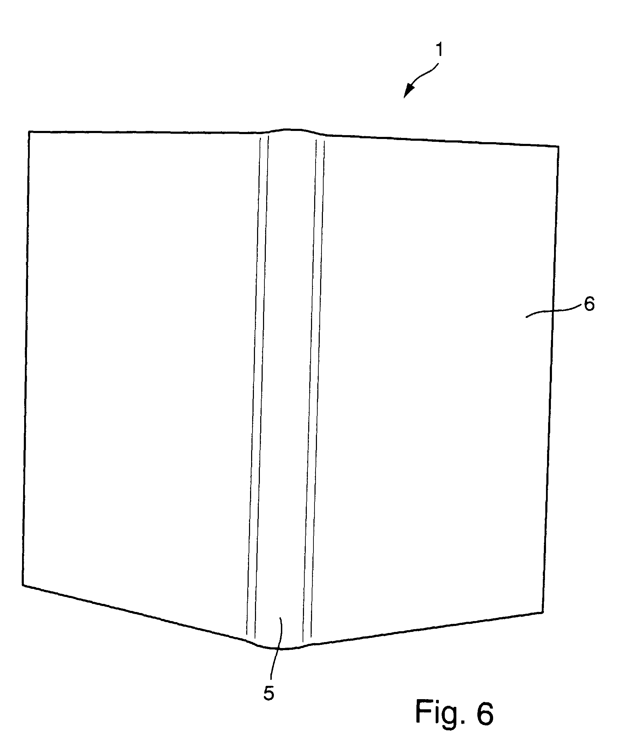

- Fig. 6: die Rückansicht des Behälters aus den Fig. 4 und 5 mit dem Behälterrücken und der Behälterdecke.

Der in der Zeichnung dargestellte Behälter 1 dient zur Lagerung von scheibenförmigen Informationsträgern 2, wie sie insbesondere durch elektronisch lesbare Audio-CDs, CD-ROMs oder neuerdings DVDs bekannt sind. Der erfindungsgemäße Behälter 1 besteht aus zwei aufeinanderklappbaren Teilbehältern 3, 4, die aus tiefgezogenen Kunststoffteilen gebildet sind und über einen Behälterrücken 5, der als Filmscharnier wirkt, miteinander verbunden sind. Auf der Rückseite des Behälters 1 ist eine Behälterdecke 6 angeordnet, die die durch das Tiefziehen entstandenen Strukturen verdeckt und ein insgesamt ästhetisch vorteilhaftes Erscheinungsbild bietet.

Bei dem in der Zeichnung dargestellten Ausführungsbeispiel sind in beiden Teilbehältern 3, 4 Aufnahmen 7 ausgebildet, die auf einem Teil des Umfangs des Informationsträgers 2 an dessen Außenkontur angepaßt sind, also bei den in der Regel kreisförmigen Informationsträgern Teilkreise darstellen. Auf den beiden einander gegenüberliegenden Seiten der Aufnahme 7 ist eine Auflage 8 angeordnet, deren Höhe die Dicke des Informationsträgers 2 übersteigt. Weiterhin weisen die beiden Teilbehälter 3, 4 einen Wulst 9 auf, deren kumulierte, von der Auflage 8 ausgemessene Höhen im aufeinandergeklappten Zustand der Teilbehälter 3, 4 die Dicke einer Jewel-Box 10 übersteigt, so daß die Möglichkeit besteht, in die Aufnahme 7 einen Informationsträger 2 einzulegen und zusätzliche Informationsträger 2 in dem Behälter 1 zu lagern, die in einer konventionellen Jewel-Box 10 gehalten sind.

Um die Struktur der Teilbehälter 3, 4 einfach zu halten, bilden die Auflagen 8 den an die Außenkontur angepaßten Rand der Aufnahme 7; weiterhin liegen sich die Auflagen 8 in der parallel zur durch den Behälterrücken 5 gebildeten Klappachse 11 liegenden Richtung gegenüber, so daß sich ein Erscheinungsbild des Behälters 1 ergibt, der sich dem einer bekannten Video-Buchbox hinsichtlich der Außenabmessungen annähert.

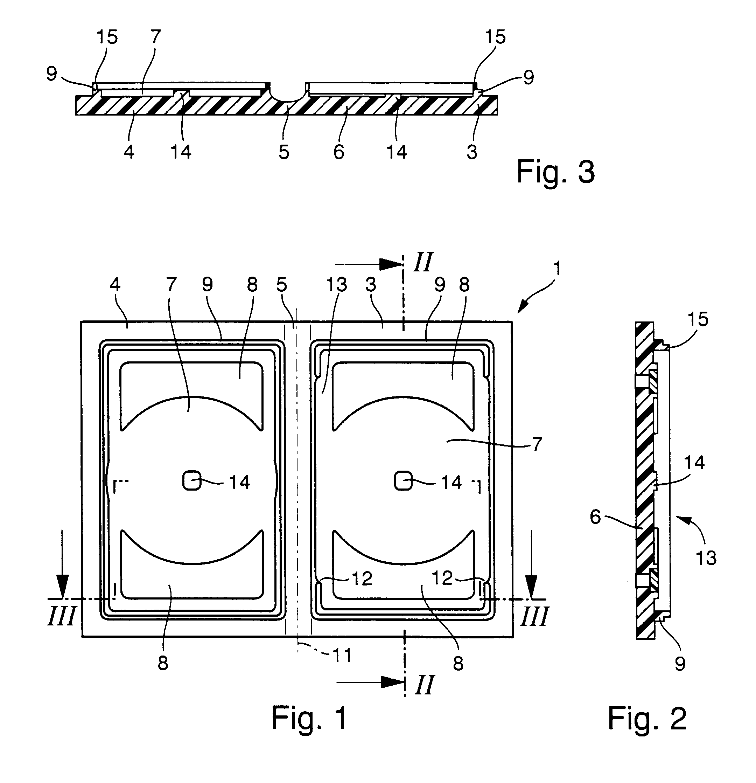

Der Wulst 9 des in der Zeichnung in Fig. 1 auf der rechten Seite dargestellten Teilbehälters 3 hat zwei gegenüberliegende Längsnuten 12 zur Bildung einer der Fixierung der Jewel-Box 10 dienenden zweiten Aufnahme 13, die symmetrisch zur Aufnahme 7 ausgebildet ist. In dieser Aufnahme 7 ist weiterhin ein Zentrierstift 14 zum Eingriff in die Öffnung des Informationsträgers 2 angeordnet, wobei die Höhe des Zentrierstiftes 14 der Höhe der Auflagen 8 entspricht, so daß die in die zweite Aufnahme 13 eingesetzte Jewel-Box 10 sowohl von den Auflagen 8 als auch von dem Zentrierstift 14 unterstützt ist und ein Kontakt zwischen der Jewel-Box 10 und dem Informationsträger 2 in der Aufnahme 7 nicht stattfinden kann.

Um ein sicheres Verschließen des Behälters 1 zu erreichen, bilden der Wulst 9 des einen Teilbehälters 3 und der Wulst 9 des anderen Teilbehälters 4 im aufeinandergeklappten Zustand einen Rastsitz 15.

## Patentansprüche

1. Behälter zur Lagerung von scheibenförmigen Informationsträgern (2), insbesondere von elektronisch lesbaren Informationsträgern (2) wie Audio-CDs, CD-ROMs oder DVDs, bestehend aus zwei aufeinanderklappbaren Teilbehältern (3, 4), dadurch gekennzeichnet, daß in mindestens einem der Teilbehälter (3) eine zumindest auf einem Teil des Umfangs des Informationsträgers (2) an dessen Außenkontour angepaßte Aufnahme (7) ausgebildet ist, daß auf zwei einander gegenüberliegenden Seiten der Aufnahme (7) eine Auflage (8) angeordnet ist, deren Höhe die Dicke des Informationsträgers (2) übersteigt, und daß die beiden Teilbehälter (3, 4) einen Wulst (9) aufweisen, deren kumulierte, von der Auflage (8) gemessenen Höhen im aufeinandergeklappten Zustand der Teilbehälter (3, 4) die Dicke einer Jewel-Box (10) übersteigen.

2. Behälter nach Anspruch 1, dadurch gekennzeichnet, daß in beiden Teilbehältern (3, 4) die Aufnahme (7) sowie die beiden Auflagen (8) ausgebildet sind.

3. Behälter nach Anspruch 1 oder 2, dadurch gekennzeichnet, daß die Auflagen (8) den an die Außenkontour angepaßten Rand der Aufnahme (7) bilden.

4. Behälter nach einem der Ansprüche 1 bis 3, dadurch gekennzeichnet, daß die beiden als tiefgezogene Kunststoffteile ausgebildeten Teilbehälter (3, 4) über einen Behälterrücken (5) miteinander verbunden sind.

5. Behälter nach Anspruch 4, dadurch gekennzeichnet, daß auf der der Aufnahme (7) gegenüberliegenden Außenseite der Teilbehälter (3, 4) eine Behälterdecke (6) angeordnet ist.

6. Behälter nach Anspruch 4 oder 5, dadurch gekennzeichnet, daß die Auflagen (8) sich in der parallel zur durch den Behälterrücken (5) gebildeten Klappachse (11) liegenden Richtung gegenüberliegen.

7. Behälter nach einem der Ansprüche 1 bis 6, dadurch gekennzeichnet, daß der Wulst (9) mindestens eines der Teilbehälter (3) zwei gegenüberliegende Längsnuten (12) zur Bildung einer der Fixierung der Jewel-Box (10) dienenden zweiten Aufnahme (13) hat.

8. Behälter nach Anspruch 7, dadurch gekennzeichnet, daß die zweite Aufnahme (13) symmetrisch zur Aufnahme (7) ausgebildet ist.

9. Behälter nach einem der Ansprüche 1 bis 8, dadurch gekennzeichnet, daß in der Aufnahme (7) ein Zentrierstift (14) zum Eingriff in die Öffnung des Informationsträgers (2) angeordnet ist, und daß die Höhe des Zentrierstiftes (14) der Höhe der Auflagen (8) entspricht.

10. Behälter nach einem der Ansprüche 1 bis 9, dadurch gekennzeichnet, daß der Wulst (9) des einen Teilbehälters (3) und der Wulst (9) des anderen Teilbehälters (4) im aufeinandergeklappten Zustand einen Rastsitz (15) bilden.
